# EUROPEAN PATENT APPLICATION

(11) **EP 3 480 524 A1**
(43) Date of publication of application: **08.05.2019**
(21) Application number: 18204311.7
(22) Date of filing: 05.11.2018
(51) Int. Cl.: F24D 3/14, F24D 3/16, F24F 5/00

(54) **A HEATING AND COOLING RADIANT PANEL**

(30) Priority: 06.11.2017 FI 20175985
(71) Applicant: Itula Oy, 56510 Puntala (FI)
(72) Inventor: Itkonen, Jukka, 53100 Lappeenranta (FI); Sormunen, Petri, 53920 Lappeenranta (FI)
(74) Representative: Papula Oy

(57) **Abstract**

The invention relates to a heating and cooling radiant panel (1) which comprises at least two tubes (3) for forming at least two tube circuits. The tube circuits are bent tube circuits, and the bent tube circuits are installed in parallel totally on the same level inside the panel (1).

## Description

### FIELD

The application relates to a heating and cooling radiant panel defined in claim 1.

### BACKGROUND

Known from the prior art are heating or cooling radiant panels. Radiant heating is a technology for heating indoor and outdoor areas. It is a method for transferring radiant heat energy from an emitting heat source to an object. The heat energy is emitted from an element, such as a floor, wall or overhead panel, and warms or cools people and other objects rather than directly heating or cooling the air. The internal air temperature for radiant heated buildings may be lower than for a conventionally heated building and still achieve the same level of comfort.

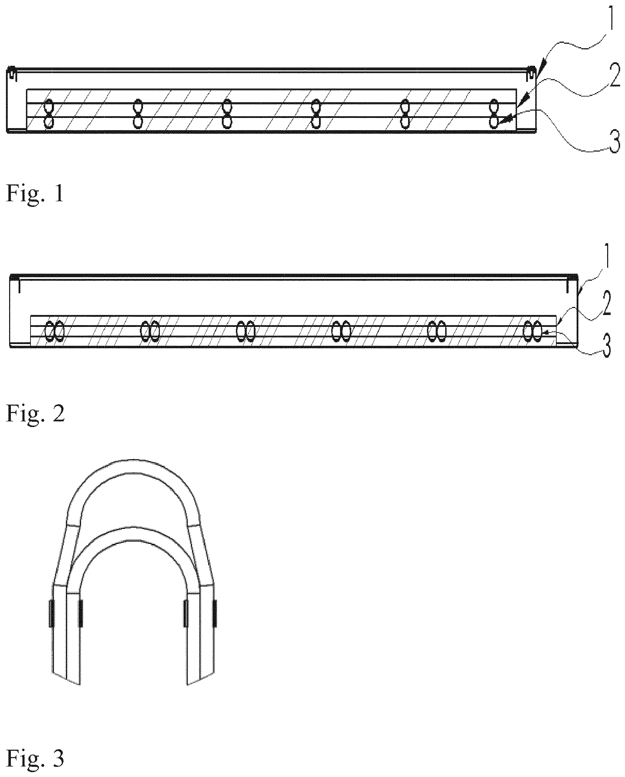

In hydronic ceiling systems, the radiant panels are often made only for heating or cooling due to the difficulty of integrating two circuits into the same panel. Installing of two circuits into the same panel has traditionally involved pressing the two tube circuits into a heat conductive medium on top of each, such as presented in Fig. 1. This typical arrangement increases the minimum height of the panel (1). Traditionally the minimum height of the heat conduction medium (2) has been at least the diameter of two tubes (3). The distance of the upper tube from the radiant sheet surface has also been shown to affect the output power of the upper circuit decreasingly.

### OBJECTIVE

The objective is to disclose a new type arrangement of the tubes in the heating and cooling radiant panels. Further, the objective is to disclose a new type panel.

### SUMMARY

The heating and cooling radiant panel is characterized by what are presented in the claims.

### BRIEF DESCRIPTION OF THE DRAWINGS

The accompanying drawings, which are included to provide a further understanding of the invention and constitutes a part of this specification, illustrate some embodiments of the invention and together with the description help to explain the principles of the invention. In the drawings:
Fig. 1 shows a cross section of a heating and cooling radiant panel according to the prior art,
Fig. 2 shows a cross section of the heating and cooling radiant panel according to one embodiment of the invention,
Figs. 3 - 5 show some embodiments of the arrangement of the heating and cooling tubes according to the invention,
Fig. 6 shows one embodiment of the heating and cooling radiant panel according to the invention,
Fig. 7 shows one embodiment of two bent tube circuits separately,
Fig. 8 shows one embodiment of the heating and cooling radiant panel according to the invention, and
Fig. 9 shows a cross-section of the heating and cooling radiant panel according to one embodiment of the invention.

### DETAILED DESCRIPTION

A heating and cooling radiant panel (1) comprises at least two tubes (3) for forming at least two tube circuits for heating and cooling agent. Preferably, the tube circuits are bent tube circuits (5,6), and the bent tube circuits (5,6) are installed in parallel totally on the same level inside the panel (1), i.e. horizontally on the same plane. Preferably, the tubes (3) of the bent tube circuits (5,6) are arranged side by side. Two tubes (3) of the bent tube circuits (5,6) are expanded by turns at each bending point of the tubes and the each tube is expanded at every second bending point.

Some embodiments of the panel (1) and its parts are shown in Figs. 2 - 9.

In this context, the panel means the heating and cooling radiant panel.

In this context, the heating and cooling agent means any agent, composition, solution, liquid or the like, e.g. water, which can be used as the heating and cooling agent in the panel (1). In one embodiment, the heating and cooling agent is water.

In this context, the bent tube circuit (5,6) means any tube circuit which comprises at least one tube (3) and which is bent. The tube (3) can be bent in the form of the serpentine tube.

In one embodiment, the tube (3) of the bent tube circuit (5,6) is formed from copper. Alternatively, the tube (3) of the bent tube circuit (5,6) can be formed from other suitable material.

The bent tube circuits (5,6) are arranged in parallel so that two tubes (3) of the bent tube circuits (5,6) are expanded by turns at each bending point of the tubes and the each tube is expanded at every second bending point. Preferably, the each bent tube circuit is expanded from one side so that another circuit can fit next to the expanded circuit. Preferably, the bent tube circuits need to be made into mirror image of each other.

In one embodiment, the bent tube circuits can be made with a special tube bending machine or by a robot armed with a bending tool. In one embodiment, the expansion of the bent tube circuits can be made in a numerically controlled bending machine or by a special expanding machine.

In one embodiment, the bent tube circuits comprise at least one pipe clamp (4) for attaching together the tubes (3) of the bent tube circuits (5,6). Preferably, the tubes (3) which are arranged side by side can be fixed to each other by the pipe clamp (4) to facilitate the installation of the bent tube circuits (5,6) to the panel (1). Further, the tubes (3) are hold together with the pipe clamps (4) in the panel (1).

In one embodiment, the panel (1) comprises a heat spreading sheet, and the bent tube circuits (5,6) are attached to the heat spreading sheet. In one embodiment, the heat spreading sheet is an aluminum radiant sheet. Alternatively, the heat spreading sheet can be formed from any suitable material.

In one embodiment, the panel comprises a heat conductive medium (2,8) arranged inside the panel (1), and the bent tube circuits (5,6) are pressed inside the heat conductive medium (2,8). The heat conductive medium can be formed from any suitable material, e.g. graphite, foam medium, heat conductive material, other suitable material or their combination. In one emdodiment, the heat conductive medium is formed from graphite. In one embodiment, the heat conductive medium acts as an adhesive material which glues the top and bottom parts of the panel. In one embodiment, the top part of the panel can be a top cover. In one embodiment, the bottom part of the panel can be a heat spreading sheet.

In one embodiment, the panel (1) is stiffened, preferably with a sandwich structure, by installing a top cover (12) to the panel. The top cover (12) is a sheet which comprises stiffening forms (15), such as form or shape, e.g. stiffening sinks which reach towards to the bottom part of the panel. In one embodiment, the depth of the stiffening form is less than 12 mm. The top cover (12) is pressed or otherwise formed for making the sheet more rigid. In one embodiment, the top cover is formed from a metal sheet. The stiffening forms of the top cover can be formed with a hydraulic press or by a shearing and punching machine.

Any suitable elements known per se can be used as the elements of the panel.

Thanks to the invention the heating and cooling tube circuits can be installed totally on the same level, and therefore they can be integrated easily into the same panel. Then the amount of the required heat conductive medium and/or the height of the panel can be decreased. Also the effect of decreased heating or cooling power of the upper tube circuit can be removed. Further, the invention decreases the manufacturing costs of the radiant heating and cooling panels because less heat conductive medium material is required to cover the tubes of the tube circuits.

### EXAMPLES

### Example 1

Fig. 2 shows a cross section of the heating and cooling radiant panel (1). This structure of the panel (1) is made possible by means of the tubes (3) of new bent tube circuits in which the tubes are arranged in parallel inside the heat conductive medium (2). This arrangement in which the tubes (3) are arranged into one layer decreases the height of the panel (1) and the amount of the required heat conductive medium (2) in the panel (1).

### Example 2

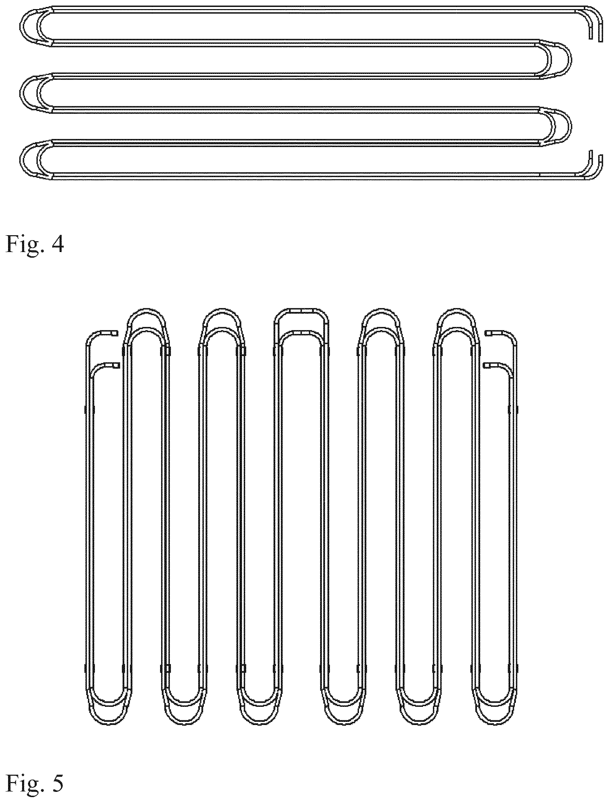

Figs. 3 - 5 show the arrangement of the heating and cooling tubes of the bent tube circuits according to the invention. Fig. 3 shows a detail of the arrangement of the bent tube circuits in which the tubes are arranged side by side and held together with a pipe clamp. The tubes can be fixed to each other by the pipe clamp to facilitate the installation of the bent tube circuits to the panel. Fig. 4 shows a basic arrangement of the bent tube circuits. Fig. 5 shows one embodiment of the arrangement of the bent tube circuits in the panel in which two basic arrangements according Fig. 4 have been combined in the panel for making an extra wide panel. The tubes of the bent tube circuits are expanded from one side so that the first circuits are expanded at the first bending points and the second circuits can fit next to the expanded circuit and the second circuits are expanded at the second bending points and the first circuits can fit next to the expanded circuit. The two serpentine tube circuits need to be made into a mirror image of each other. The shape of the bent tube circuits can be designed per the needs of the product to be made. These arrangements according to Figs. 3 - 5 make it possible to install the tubes in one layer lowering the amount of required heat conductive medium in the panel, e.g. in a panel cassette, and the height of the panel, e.g. the panel cassette.

### Example 3

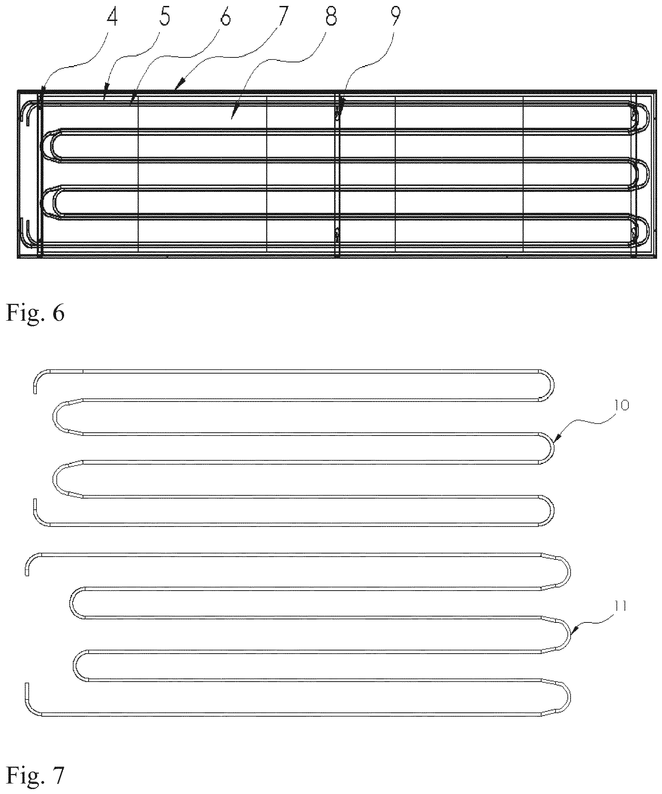

Fig. 6 shows the heating and cooling radiant panel. The panel comprises a cassette (7) and two bent tube circuits (5,6). The bent tube circuits (5, 6) are pressed or otherwise installed inside a heat conductive medium (8). The tubes of the bent tube circuits (5,6) can be made by a bender machine or with a special circuit bent expansion machine. The heat conductive medium (8) is fixed onto the cassette (7) by a glue method or by another fixing method. Panel stiffening girders (9) and tube holding clamps as pipe clamps (4) are fixed to the cassette (7) to provide a robust structure. The tubes of the bent tube circuits (5,6) are bent so that the heating and cooling water circuits can be installed totally on the same level, removing the effect of decreased heating or cooling power of the upper tube circuit. This is possible by making the two bent tube circuits (5,6) into mirror images of each other. The bent tube circuits are expanded from one side so that the second circuit can fit next to the expanded circuit. The bent tube circuits can be water circuits. Fig. 7 shows two water circuits (10,11) separately. These circuits can be arranged side by side into the same level.

### Example 4

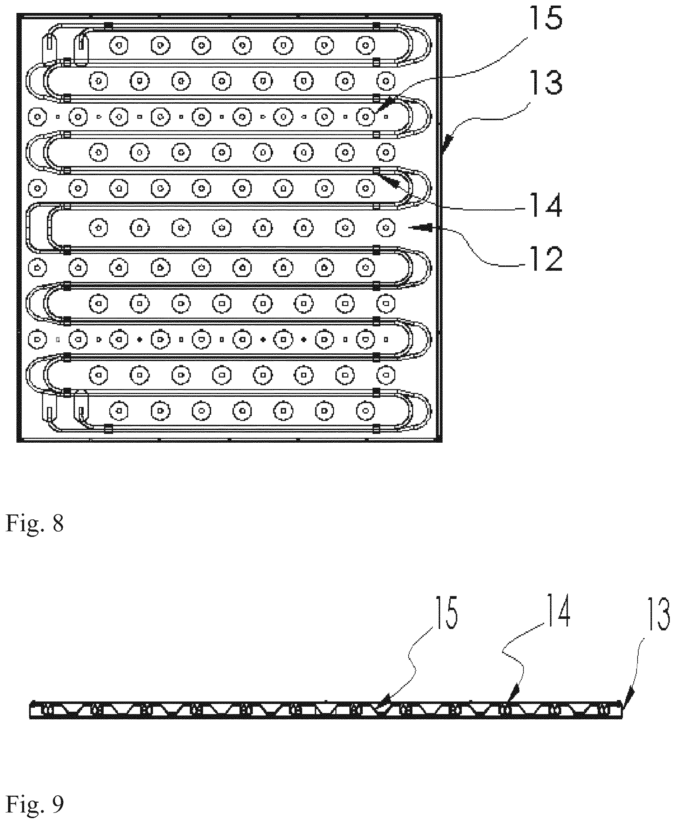

Fig. 8 shows the heating and cooling radiant panel according to the invention. This panel is a sandwich panel. Fig. 9 shows a cross-section of this heating and cooling radiant sandwich panel.

The panel comprises a cassette (13) and two bent tube circuits inside the cassette. The bent tube circuits are installed next to each other according to the invention. The serpentine bent tube circuits can be attached by means of plastic pipe clips (14) which used as pipe clamps in order to hold the tubes of the bent tube circuits in place during installation.

The panel is stiffened with a sandwich structure by installing a top cover (12) to the cassette (13). The top cover is a sheet which comprises stiffening forms (15), e.g. stiffening sinks, which reach towards to the bottom part of the cassette (13). Preferably, the depth of the stiffening forms (15) are less than 12 mm. The top cover (12) is pressed or otherwise formed for making the sheet more rigid. The top cover can be formed from a metal sheet. The stiffening forms (15) of the top cover can be formed with hydraulic presses or by a shearing and punching machine.

The special arrangement of the bent tube circuits in which the tubes are installed in parallel totally on the same level offers a low enough panel structure. The lower height of the panel makes it possible to prepare the sandwich structure into the panel. A sandwich element can be manufactured from the sandwich structure without the loss of power.

The elements and parts of the heating and cooling radiant panel used in these examples are known per se in the art, and therefore they are not described in any more detail in this context.

The arrangements of the bent tube circuits are suitable in different embodiments for using in different kinds of heating and cooling radiant panels. The heating and cooling radiant panels are suitable in different embodiments for using in different kinds of products.

The invention is not limited merely to the examples referred to above; instead many variations are possible within the scope of the inventive idea defined by the claims.

## Claims

1. A heating and cooling radiant panel (1) which comprises at least two tubes (3) for forming at least two tube circuits and the tube circuits are bent tube circuits (5,6), and the bent tube circuits (5,6) are installed on the same level inside the panel (1), **characterized in that** the bent tube circuits (5, 6) are arranged in parallel totally on the same level inside the panel (1) so that two tubes (3) of the bent tube circuits (5,6) are expanded by turns at each bending point of the tubes and the each tube is expanded at every second bending point.

2. The heating and cooling radiant panel according to claim 1, **characterized in that** the bent tube circuits (5,6) comprise at least one pipe clamp (4) for attaching together the tubes (3) of the bent tube circuits (5,6).

3. The heating and cooling radiant panel according to claim 1 or 2, **characterized in that** the panel (1) comprises a heat spreading sheet, and the bent tube circuits (5,6) are attached to the heat spreading sheet.

4. The heating and cooling radiant panel according to any one of claims 1 to 3, **characterized in that** the panel (1) comprises a heat conductive medium (2,8) arranged inside the panel (1), and the bent tube circuits (5,6) are pressed inside the heat conductive medium (2,8).

5. The heating and cooling radiant panel according to any one of claims 1 to 4, **characterized in that** the panel (1) is stiffened by installing a top cover (12) comprising stiffening forms to the panel.

6. The heating and cooling radiant panel according to any one of claims 1 to 5, **characterized in that** the tube (3) of the bent tube circuit (5,6) is formed from copper.
